# EUROPÄISCHE PATENTSCHRIFT

(11) **EP 2 956 750 B1**
(45) Veröffentlichungstag und Bekanntmachung des Hinweises auf die Patenterteilung: **06.03.2019**
(21) Anmeldenummer: 13824110.4
(22) Anmeldetag: 10.12.2013
(51) Int. Cl.: G01L 3/10

(54) **DREHMOMENTMESSVORRICHTUNG**
TORQUE MEASURING DEVICE
DISPOSITIF DE MESURE DE COUPLE

(30) Priorität: 14.02.2013 DE 102013202383
(43) Veröffentlichungstag der Anmeldung: 23.12.2015
(73) Patentinhaber: Schaeffler Technologies AG & Co. KG, 91074 Herzogenaurach (DE)
(72) Erfinder: BENKERT, Frank, 97534 Waigolshausen (DE); HEIM, Jens, 97493 Bergrheinfeld (DE); SPERBER, Matthias, 96193 Wachenroth (DE); GIERL, Jürgen, 91052 Erlangen (DE); NUISSL, Christian, 90763 Fürth (DE); GLÜCK, Stefan, 97424 Schweinfurt (DE)
(86) Internationale Anmeldenummer: PCT/DE2013/200342
(87) Internationale Veröffentlichungsnummer: WO 2014/124617

(56) Entgegenhaltungen:
- EP-A1- 1 560 011
- CN-U- 201 737 127
- DE-A1- 19 843 579
- DE-A1-102005 060 106
- DE-U1-202009 001 463
- US-A1- 2012 234 108

## Beschreibung

### Gebiet der Erfindung

Die Erfindung betrifft eine Drehmomentmessvorrichtung sowie ein Tretlager, welches mit einer Drehmomentmessvorrichtung ausgerüstet ist. Weiter betrifft die Erfindung ein Verfahren zur Herstellung eine Drehmomentmessvorrichtung.

### Hintergrund der Erfindung

Eine Drehmomentmessvorrichtung, mit der ein in einer Welle wirkendes Drehmoment gemessen wird, erfasst üblicherweise eine von dem zu messenden Drehmoment abhängige Torsion der Welle. Die Torsion kann beispielsweise optisch detektiert werden. Eine Drehmomentmessung mit optischen Methoden ist prinzipiell beispielsweise aus der DE 10 2005 055 949 A1 bekannt.

Zur Detektion einer Winkellage einer Welle oder einer Verdrehung zwischen zwei relativ zueinander tordierbaren Bauteilen sind auch magnetische Maßverkörperungen geeignet. Als Stand der Technik ist in diesem Zusammenhang beispielhaft die DE 10 2010 023 355 A1 zu nennen.

Ebenso ist es möglich, ein in einer Welle oder Hülse wirkendes Drehmoment über die drehmomentabhängige Veränderung magnetischer Eigenschaften zumindest eines magnetisierten Abschnitts der Welle beziehungsweise der Hülse zu messen. Eine hierauf basierende Messvorrichtung ist zum Beispiel aus der EP 2 365 927 A1, die ein Tretlager betrifft, bekannt.
Zur Drehmomentmessung sind prinzipiell auch Dehnungsmessstreifen geeignet, welche an geeigneter Stelle eines durch ein Drehmoment belasteten Bauteils appliziert werden. Die DE-Patentanmeldung 10 2012 208 492.4 offenbart ein Verfahren zur Herstellung einer Dehnmesstreifenanordnung, bei welchem an der Oberfläche einer Welle eine verformungssensitive Messschicht aufgebracht und anschließend mittels Laser bearbeitet wird.

Die Verwendung von Dehnungsmessstreifen bei Fahrrädern mit elektrischem Hilfsantrieb ist beispielsweise in der CN201737127U beschrieben. Ein Dehnungsmessstreifen befindet sich in diesem Fall auf einer Torsionshülse.

Die US2012/0234108 offenbart einen Drehmomentsensor mit einen Dehnungsmessstreifen der an der Oberfläche einer Welle angeklebt ist.

Die DE19843579 offenbart einen Drehmomentsensor, wobei einen Dichtschichtwiderstand auf eine rechteckförmige Oberfläche einer Welle angeordnet ist.Die DE102005060106 offenbart einen Federelement mit einem Dehnungsmesselement der mittels PVD bzw. CVD-Process auf dessen Oberfläche angebracht ist aufweist.

### Aufgabe der Erfindung

Der Erfindung liegt die Aufgabe zugrunde, eine Drehmomentmessvorrichtung insbesondere hinsichtlich der zuverlässigen Reproduzierbarkeit von Produkteigenschaften in der Massenfertigung gegenüber dem genannten Stand der Technik weiterzuentwickeln.

### Zusammenfassung der Erfindung

Diese Aufgabe wird erfindungsgemäß gelöst durch eine Drehmomentmessvorrichtung mit den Merkmalen des Anspruchs 1, durch ein Tretlager nach Anspruch 12, sowie durch ein Verfahren mit den Merkmalen des Anspruchs 13. Im Folgenden im Zusammenhang mit der Drehmomentmessvorrichtung oder dem Tretlager erläuterte Ausgestaltungen und Vorteile der Erfindung gelten sinngemäß auch für das Herstellungsverfahren und umgekehrt.

Die Drehmomentmessvorrichtung umfasst
- eine als Antriebswelle vorgesehene innere Welle,
- eine mit der inneren Welle verbundene, diese koaxial umgebende, als Abtriebswelle vorgesehene Hohlwelle,
wobei die Hohlwelle eine einen Dehnungsmessstreifen umfassende Direktbeschichtung zur Drehmomentmessung aufweist.

Unter einer Direktbeschichtung wird hierbei eine Beschichtung verstanden, die während ihres Herstellungsprozesses direkt auf einem zu beschichteten Bauteil erzeugt wird. Ein typisches allgemeines Beispiel hierfür ist die Lackierung eines Bauteils: Die Lackschicht wird erst während des Lackierens direkt auf dem zu lackierenden Bauteil erzeugt. Ein Gegenbeispiel, welches nicht unter die Definition einer Direktbeschichtung fällt, ist das Aufkleben einer Folie auf ein Bauteil.

Die Direktbeschichtung, welche insgesamt einen Dehnungsmessstreifen bildet oder zumindest partiell verformungssensitive Eigenschaften aufweist, kann gemäß der DE-Patentanmeldung 10 2012 208 492.4 erzeugt werden.

Die Hohlwelle, auf welcher der Dehnungsmessstreifen in Form einer Direktbeschichtung erzeugt ist, ist vorzugsweise aus einem metallischen Grundwerkstoff, insbesondere Stahl, hergestellt, wobei auf dem Grundwerkstoff eine Isolationsschicht aufgebracht ist, auf welcher sich eine verformungssensitive Schicht als Messschicht befindet. Im Vergleich zu einem auf ein tordierbares Teil aufgeklebten Dehnungsmessstreifen zeichnet sich der erfindungsgemäße Aufbau der Drehmomentmessvorrichtung durch eine sehr viel bessere Reproduzierbarkeit und langfristige Stabilität der messtechnischen Eigenschaften aus. Ein weitere Vorteil ist dadurch gegeben, dass weder die Hohlwelle noch die innere Welle durch Strukturen wie Kerben oder Nuten geschwächt ist.

Die Isolationsschicht, auf welcher die zur Drehmomentmessung vorgesehene verformungssensitive Schicht aufgebracht ist, umfasst beispielsweise ein Oxid oder ein Karbid. Geeignete Werkstoffe für die Isolationsschicht sind insbesondere Al₂O₃ sowie SiO₂. Ebenso ist als Isolationsschicht eine amorphe Kohlenstoffschicht geeignet. Die Isolationsschicht ist beispielsweise im PVD (physical vapour deposition)- oder PACVD (physical assisted chemical vapour deposition)-Verfahren herstellbar. Auch die Verwendung von Polymeren zur Herstellung der Isolationsschicht ist möglich.

Die Messschicht, welche sich auf der Isolationsschicht befindet, ist beispielsweise durch eine Nickellegierung, insbesondere eine NiCr-Legierung, gebildet und weist vorzugsweise eine Dicke von 0,05 µm bis 1,0 µm auf.

Auf die Messschicht wird in bevorzugter Ausgestaltung eine organische oder anorganische Schutzschicht aufgebracht. Die Gesamtdicke der verformungssensitiven Direktbeschichtung einschließlich Schutzschicht beträgt vorzugsweise nicht mehr als 20 µm.

Zusätzlich zur als Dehnungsmessstreifen fungierenden Direktbeschichtung befindet sich auf der Hohlwelle gemäß einer vorteilhaften Weiterbildung eine Signalübertragungskomponente, welche mit einer weiteren, ortsfesten Signalübertragungskomponente zusammenwirkt. In einer einfachen Ausgestaltung kann es sich bei der Signalübertragungskomponente um einen Schleifring handeln. Alternativ ist eine drahtlose, beispielsweise induktive Signalübertragung zwischen der Hohlwelle und einem nicht rotierenden Bauteil vorgesehen. Zusätzlich zur Signalübertragung ist in beiden Fällen auch eine leitungsgebundene beziehungsweise drahtlose Energieübertragung zwischen der mit der Drehmomentsensorik ausgerüsteten Hohlwelle und einem umgebenden, nicht rotierenden Bauteil möglich. Die berührungsfreie Signal- und Energieübertragung hat gegenüber der einfacheren, mit schleifenden Kontakten arbeitenden Lösung den prinzipiellen Vorteil fehlenden Verschleißes sowie geringerer Schmutzempfindlichkeit auf. Zudem ist durch die nicht berührende Übertragung von Signalen und Energie ein Vorteil hinsichtlich des bei der Rotation der Einheit aus innerer Welle und Hohlwelle entstehenden Bremsmomentes gegeben.

Neben einer Signalübertragungskomponente weist die Hohlwelle optional auch einer Signalauswertungskomponente auf. Die für den Betrieb dieser Signalauswertungskomponente benötigte Energie kann ebenfalls entweder über berührende Kontakt oder kontaktlos übertragen werden. In Ausführungsformen, in denen sich keine Signalauswertungskomponente auf der Hohlwelle oder einem mit dieser verbundenen Teil befindet, kann die Signalverarbeitung beispielsweise in einem Gehäuse der Drehmomentmessvorrichtung oder in einer außerhalb des Gehäuses liegenden externen Auswerteeinheit erfolgen.

Unabhängig davon, wie eine eventuelle Signalauswertungskomponente auf der rotierbaren Hohlwelle oder einem drehfest mit dieser verbundenen Teil ausgebildet ist, kann auf der inneren Welle oder einem mit dieser drehfest verbundenen Teil eine Komponente einer Drehzahlmessvorrichtung angeordnet sein.

Die erfindungsgemäße Drehmomentmessvorrichtung ist besonders für die Verwendung in einem Fahrrad mit elektrischem Hilfsantrieb geeignet. Allgemein ist die Drehmomentmessvorrichtung für alle Anwendungen prädestiniert, bei welchen ein Drehmoment an zwei verschiedenen Stelle in eine Antriebswelle einleitbar ist und das summierte eingeleitete Drehmoment mittels einer einzigen, die Antriebswelle konzentrisch umgebenden Abtriebswelle weitergeleitet wird. Die Drehmomentmessvorrichtung erfasst in jedem solchen Fall zuverlässig das summierte, in der Abtriebswelle wirkende Drehmoment.

Das Verfahren zur Herstellung der Drehmomentmessvorrichtung umfasst unabhängig vom technischen Anwendungsgebiet folgende Merkmale:
a) eine eine Messschicht zur Drehmomentmessung bereitstellende, einen Dehnungsmessstreifen bildende Beschichtung wird als Direktbeschichtung auf einem Grundwerkstoff einer Hohlwelle aufgebracht, wobei die Strukturierung des Dehnungsmessstreifens erst nach der Aufbringung der Beschichtung auf die Hohlwelle erfolgt,
b) die Hohlwelle wird drehfest mit einer koaxial innerhalb dieser angeordneten inneren Welle verbunden, wobei die innere Welle eine Antriebswelle und die Hohlwelle eine Abtriebswelle bildet.
Der Dehnungsmessstreifen kann hierbei entweder auf der als Einzelteil vorliegenden Hohlwelle erzeugt werden oder erst nach der kompletten Montage der die Hohlwelle sowie die innere Welle umfassenden Baueinheit aufgebracht werden. Das Verfahrensschritt a) kann also vor oder nach dem Verfahrensschritt b) ausgeführt werden. Ebenso ist es möglich, die als Dehnungsmessstreifen fungierende Direktbeschichtung als beliebigen Zwischenschritt während der Fertigung der Drehmomentmessvorrichtung aufzubringen.

Die verformungssensitive Eigenschaften aufweisende, einen Dehnungsmessstreifen bildende Beschichtung kann im PVD- oder PACVD-Verfahren hergestellt werden. Die Strukturierung dieser Beschichtung erfolgt vorzugsweise per Laser, wie in der DE-Patentanmeldung 10 2012 208 492.4 beschrieben.

Der per Laser bearbeitete Dehnungsmessstreifen weist eine Streifenstruktur auf, wobei die einzelnen Streifen jeweils einen Abschnitt einer um die Rotationsachse der Hohlwelle verlaufenden Schraubenlinie beschreiben, welche zur Rotationsachse um 30° bis 60°, vorzugsweise um 45°, schräg gestellt ist. In jedem Fall wird dabei direkt eine Schicht bearbeitet, die nicht in einer Ebene angeordnet ist, sondern eine räumliche Struktur darstellt. Die Anordnung der verformungssensitiven Strukturen an der Oberfläche der Hohlwelle erfolgt vorzugsweise in Vollbrückenanordnung. In durch die genannte 45°-Mäanderstruktur entstehenden, nicht zum Messen des Drehmoments genutzten Bereichen der Oberfläche der Direktbeschichtung sind Kontaktpads platzierbar. Die Kontaktierungsstellen können ebenso wie die übrigen Bereiche der zur Drehmomentmessung sowie gegebenenfalls zur Signalverarbeitung ausgebildeten Oberflächenbereiche mit einer Schutzschicht gegen Umwelteinflüsse geschützt werden. Einschließlich der gesamten Aufbau- und Verbindungstechnik sowie Energie- und Signalübertragungstechnik ist die gesamte Drehmomentmessvorrichtung äußerst platzsparend aufgebaut. Komponenten der Energie- und Signalübertragungstechnik, welche außerhalb der Drehmomentmessvorrichtung angeordnet sind, befinden sich vorzugsweise in ebenfalls raumsparender Anordnung in einem die Drehmomentmessvorrichtung unmittelbar umgebenden, im Wesentlichen hülsenförmigen Bauteil.

Bei der Verwendung der Drehmomentmessvorrichtung in einem Fahrrad mit elektrischem Hilfsantrieb sind sämtliche Komponenten der Drehmoment- und Drehzahlsensorik in den Rahmen, innerhalb des Einbauraums des Tretlagers, integrierbar. Durch die Drehmoment- und Drehzahlmessung kann eine Leistungsmesssystem bereitgestellt werden, mit welchem auch im semiprofessionellen Bereich die Leistung des Radfahrers ermittel- und anzeigbar ist.

Nachfolgend wird ein Ausführungsbeispiel der Erfindung anhand einer Zeichnung näher erläutert. Hierin zeigen in teilweise vereinfachter Darstellung:

### Kurze Beschreibung der Zeichnung

- Fig. 1: ein Tretlager mit einer Drehmomentmessvorrichtung,
- Fig. 2: ein Detail des Tretlagers nach Fig. 1.

### Ausführliche Beschreibung der Zeichnung

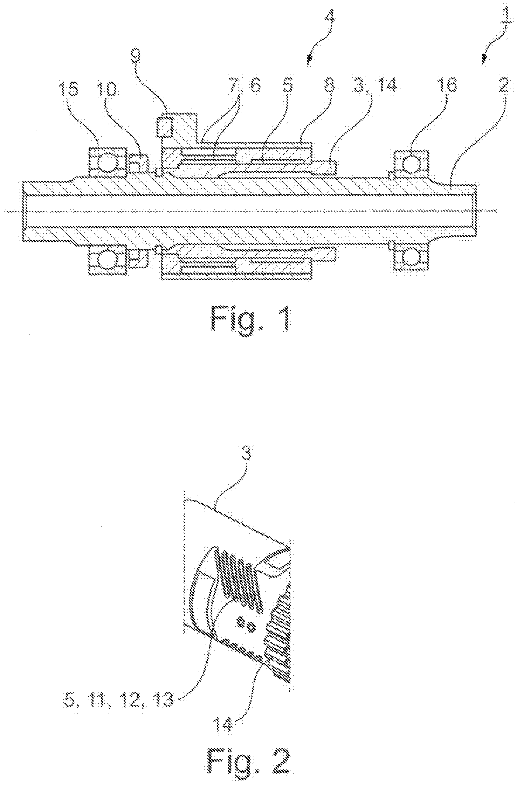

Ein in Fig. 1 insgesamt mit dem Bezugszeichen 1 gekennzeichnetes Tretlager weist eine Welle 2 auf, die durch zwei Wälzlager 15,16, nämlich Kugellager, rotierbar im Rahmen eines nicht weiter dargestellten Fahrrads mit elektrischem Hilfsantrieb gelagert ist. An beiden Enden der Welle 2 ist jeweils eine nicht dargestellte Tretkurbel befestigt. Die Welle 2 ist hohl und wird auch als innere Welle bezeichnet.

Mit der inneren Welle 2 ist eine Hohlwelle 3, welche die Welle 2 konzentrisch umgibt, einseitig fest verbunden. Im nicht mit der inneren Welle 2 verbundenen Abschnitt der Hohlwelle 3 ist diese von der Welle 2 beabstandet, so dass ein Ringspalt zwischen der inneren Welle 2 und der Hohlwelle 3 gebildet ist.

Auf der in der Anordnung nach Fig. 1 rechten Seite der Hohlwelle 3 ist diese in nicht dargestellter Weise drehfest, direkt oder indirekt, mit einem Kettenblattträger des Fahrrads verbunden. Hinsichtlich der prinzipiellen Funktion des Tretlagers 1 wird auf den eingangs zitierten Stand der Technik, insbesondere auf die EP 2 365 927 A1, verwiesen.

Die Hohlwelle 3 fungiert in Zusammenwirkung mit der inneren Welle 2 als Drehmomentmessvorrichtung 4, welche im Folgenden, auch anhand Fig. 2, beschrieben ist:
Auf der Außenoberfläche der Hohlwelle 3 befindet sich ein als Direktbeschichtung hergestellter Dehnungsmessstreifen 5. Da das gesamte über die Tretkurbeln auf beiden Seiten der inneren Welle 2 in dieses eingeleitete Drehmoment über die Hohlwelle 3 zum Kettenblatträger geleitet wird, zeigt die Torsion der Hohlwelle 3 exakt die Summe des auf die innere Welle 2 vom Fahrer aufgebrachten Drehmoments an.

Zusätzlich zum Dehnungsmessstreifen 5 befindet sich auf der Hohlwelle 3 eine erste Signal- und Energieübertragungskomponente 6. Eine mit dieser zusammenwirkende zweite Signal- und Energieübertragungskomponente 7 ist, die Hohlwelle 3 konzentrisch umgebend, in einem im Wesentlichen hülsenförmigen Sensorgehäuse 8 angeordnet. Im dargestellten Ausführungsbeispiel dienen die Signal- und Energieübertragungskomponenten 6,7 der induktiven Energie- und Signalübertragung zwischen der rotierenden, die innere Welle 2 sowie die Hohlwelle 3 umfassenden Baueinheit und dem starr im Fahrradrahmen angeordneten Sensorgehäuse 8. Am Sensorgehäuse 8 ist auch ein Sensoranschluss 9 erkennbar. Ein an diesen Sensoranschluss 9 angeschlossenes Kabel verläuft typischerweise innerhalb eines Rahmenrohrs des Fahrrads. Weiter ist in Fig. 1 eine Drehzahlmesskomponente 10 erkennbar, welche auf der inneren Welle 2 befestigt ist und mit einer weiteren, rahmenfesten Drehzahlmesskomponente zusammenwirkt.

Der als Direktbeschichtung auf der Hohlwelle 3 hergestellte Dehnungsmessstreifen 5 umfasst eine direkt auf dem Grundwerkstoff, nämlich Stahl, der Hohlwelle 3 erzeugte Isolationsschicht 11, eine auf dieser direkt erzeugte, per Laser strukturierte, die eigentliche verformungssensitive Schicht darstellende Messschicht 12, sowie eine die Messschicht 12 sowie Kontaktierungsstellen gegen Umwelteinflüsse abschirmende Schutzschicht 13.

Hinsichtlich der Strukturierung des Dehnungsmessstreifens 5 wird auf Fig. 2 verwiesen, in der auch eine Verzahnung 14 erkennbar ist, welche der Anbindung des Kettenblattträgers an der Hohlwelle 3 dient. Der Dehnungsmessstreifen 5 liegt insgesamt auf einer zylindrischen Oberfläche, nämlich der Oberfläche der Hohlwelle 3 und wird während der Herstellung der Drehmomentmessvorrichtung 4 auf dieser Oberfläche erzeugt. Im Unterschied zum Stand der Technik, der das Aufkleben eines ursprünglich in einer Ebene gefertigten Dehnungsmessstreifens auf eine Welle oder ein sonstiges gekrümmtes Bauteil vorsieht, wird also nach der Erfindung unmittelbar eine dreidimensionale verformungssensitive Struktur, nämlich der als Direktbeschichtung ausgebildete Dehnungsmessstreifen 5 erzeugt. Diese Erzeugung schließt das Aufbringen der verformungssensitiven Schicht per PVD- oder PACVD-Verfahren sowie die anschließende Laserstrukturierung der Schicht ein.

### Bezugszeichenliste

- 1: Tretlager
- 2: innere Welle
- 3: Hohlwelle
- 4: Drehmomentmessvorrichtung
- 5: Dehnungsmessstreifen
- 6: erste Signal- und Energieübertragungskomponente
- 7: zweite Signal- und Energieübertragungskomponente
- 8: Sensorgehäuse
- 9: Sensoranschluss
- 10: Drehzahlmesskomponente
- 11: Isolationsschicht
- 12: Messschicht
- 13: Schutzschicht
- 14: Verzahnung
- 15: Wälzlager
- 16: Wälzlager

## Patentansprüche

1. Drehmomentmessvorrichtung (4), umfassend
- eine als Antriebswelle vorgesehene innere Welle (2),
- eine mit der inneren Welle (2) verbundene, diese koaxial umgebende, als Abtriebswelle vorgesehene Hohlwelle (3),
wobei die Hohlwelle (3) eine einen Dehnungsmessstreifen (5) umfassende Direktbeschichtung zur Drehmomentmessung aufweist, wobei der Dehnungsmessstreifen (5) eine Messschicht (12) aufweist,
**dadurch gekennzeichnet, dass** der Dehnungsmessstreifen (5) unmittelbar auf einer zylindrischen Oberfläche der Hohlwelle (3) angeordnet ist, und
dass die Messchicht (12) eine Laserstrukturierung aufweist.

2. Drehmomentmessvorrichtung (4) nach Anspruch 1, **dadurch gekennzeichnet, dass** die Hohlwelle (3) einen metallischen Grundwerkstoff, eine hierauf aufgebrachte Isolationsschicht (11), sowie die auf dieser aufgebrachte, den Dehnungsmessstreifen (5) bildende Messschicht (12) aufweist.

3. Drehmomentmessvorrichtung (4) nach Anspruch 1 oder 2, **dadurch gekennzeichnet, dass** die Messschicht (12) mindestens 0,05 µm und höchstens 1,0 µm dick ist.

4. Drehmomentmessvorrichtung (4) nach einem der Ansprüche 1 bis 3, **dadurch gekennzeichnet, dass** die Messschicht (12) aus einer NiCr-Legierung gebildet ist.

5. Drehmomentmessvorrichtung (4) nach einem der Ansprüche 1 bis 4, **dadurch gekennzeichnet, dass** auf die Messschicht (12) eine Schutzschicht (13) aufgetragen ist.

6. Drehmomentmessvorrichtung (4) nach einem der Ansprüche 1 bis 5, **dadurch gekennzeichnet, dass** die Gesamtdicke der Direktbeschichtung maximal 20 µm beträgt.

7. Drehmomentmessvorrichtung (4) nach einem der Ansprüche 1 bis 6, **gekennzeichnet durch** eine auf der Hohlwelle (3) angeordnete Signalübertragungskomponente (6).

8. Drehmomentmessvorrichtung (4) nach Anspruch 7, **dadurch gekennzeichnet, dass** als Signalübertragungskomponente ein Schleifring vorgesehen ist.

9. Drehmomentmessvorrichtung (4) nach Anspruch 7, **dadurch gekennzeichnet, dass** die Signalübertragungskomponente (6) zur drahtlosen Signalübertragung ausgebildet ist.

10. Drehmomentmessvorrichtung (4) nach einem der Ansprüche 7 bis 9, **gekennzeichnet durch** eine auf der Hohlwelle (6) angeordnete Signalauswertungskomponente.

11. Drehmomentmessvorrichtung (4) nach einem der Ansprüche 1 bis 10, **gekennzeichnet durch** eine auf der inneren Welle (2) angeordnete Drehzahlmesskomponente (10).

12. Tretlager, umfassend eine Drehmomentmessvorrichtung (4) nach einem der Ansprüche 1 bis 11.

13. Verfahren zur Herstellung einer Drehmomentmessvorrichtung (4), mit folgenden Merkmalen:
- eine eine Messschicht (12) zur Drehmomentmessung bereitstellende, einen Dehnungsmessstreifen (5) bildende Beschichtung wird als Direktbeschichtung auf einem Grundwerkstoff einer Hohlwelle (3) aufgebracht, wobei die Strukturierung des Dehnungsmessstreifens (5) erst nach der Aufbringung der Beschichtung auf die Hohlwelle (3) erfolgt,
- die Hohlwelle (3) wird drehfest mit einer koaxial innerhalb dieser angeordneten inneren Welle (2) verbunden, wobei die innere Welle (2) eine Antriebswelle und die Hohlwelle (3) eine Abtriebswelle bildet,
**dadurch gekennzeichnet, dass** der Dehnungsmessstreifen unmittelbar auf einer zylindrischen Oberfläche der Hohlwelle (3) aufgebracht wird, und
dass die Strukturierung des Dehnungsmessstreifens (5) durch Laserbearbeitung erfolgt.

14. Verfahren nach Anspruch 13, **dadurch gekennzeichnet, dass** zur Herstellung der Direktbeschichtung zunächst eine Isolationsschicht (11) auf dem Grundwerkstoff der Hohlwelle (3) und anschließend die Messschicht (12) auf der Isolationsschicht (11) erzeugt wird.

15. Verfahren nach Anspruch 13 oder 14, **dadurch gekennzeichnet, dass** mindestens eine der Schichten Isolationsschicht (11) und Messschicht (12) mit einem PVD oder PACVD-Verfahren erzeugt werden.

## Claims

1. Torque measuring device (4), comprising
- an inner shaft (2) provided as drive shaft,
- a hollow shaft (3) which is connected to and coaxially surrounds the inner shaft (2) and which is provided as output shaft,
wherein the hollow shaft (3) has a direct coating, which comprises a strain gauge (5), for torque-measurement, wherein the strain gauge (5) has a measuring layer (12), **characterized in that** the strain gauge (5) is arranged directly on a cylindrical surface of the hollow shaft (3), and
**in that** the measuring layer (12) has a laser structuring.

2. Torque measuring device (4) according to Claim 1, **characterized in that** the hollow shaft (3) has a metallic basic material, an insulation layer (11) applied to said basic material, and the measuring layer (12) which is applied to said insulation layer and which forms the strain gauge (5).

3. Torque measuring device (4) according to Claim 1 or 2, **characterized in that** the measuring layer (12) has a thickness of at least 0.05 µm and at most 1.0 µm.

4. Torque measuring device (4) according to any of Claims 1 to 3, **characterized in that** the measuring layer (12) is formed from an NiCr alloy.

5. Torque measuring device (4) according to any of Claims 1 to 4, **characterized in that** a protective layer (13) is applied to the measuring layer (12).

6. Torque measuring device (4) according to any of Claims 1 to 5, **characterized in that** the total thickness of the direct coating amounts to at most 20 µm.

7. Torque measuring device (4) according to any of Claims 1 to 6, **characterized by** a signal transmitting component (6) arranged on the hollow shaft (3).

8. Torque measuring device (4) according to Claim 7, **characterized in that** a slip ring is provided as signal transmitting component.

9. Torque measuring device (4) according to Claim 7, **characterized in that** the signal transmitting component (6) is designed for wireless signal transmission.

10. Torque measuring device (4) according to any of Claims 7 to 9, **characterized by** a signal evaluation component arranged on the hollow shaft (6).

11. Torque measuring device (4) according to any of Claims 1 to 10, **characterized by** a rotational speed measuring component (10) arranged on the inner shaft (2).

12. Pedal crank bearing comprising a torque measuring device (4) according to any of Claims 1 to 11.

13. Method for producing a torque measuring device (4), having the following features:
- a coating which provides a measuring layer (12) for torque measurement and which forms a strain gauge (5) is applied as a direct coating to a basic material of a hollow shaft (3), wherein the structuring of the strain gauge (5) is performed only after the application of the coating to the hollow shaft (3),
- the hollow shaft (3) is connected rotationally conjointly to an inner shaft (2) arranged coaxially within said hollow shaft, wherein the inner shaft (2) forms a drive shaft and the hollow shaft (3) forms an output shaft,
**characterized in that** the strain gauge is applied directly to a cylindrical surface of the hollow shaft (3), and
**in that** the structuring of the strain gauge (5) is performed by laser machining.

14. Method according to Claim 13, **characterized in that**, for the production of the direct coating, firstly an insulation layer (11) is generated on the basic material of the hollow shaft (3), and subsequently the measuring layer (12) is generated on the insulation layer (11).

15. Method according to Claim 13 or 14, **characterized in that** at least one of the layers of insulation layer (11) and measuring layer (12) is generated using a PVD or PACVD method.

## Revendications

1. Dispositif de mesure de couple (4), comprenant
- un arbre interne (2) conçu en tant qu'arbre d'entraînement,
- un arbre creux (3) relié à l'arbre interne (2), entourant celui-ci de manière coaxiale et conçu en tant qu'arbre de sortie,
l'arbre creux (3) possédant un revêtement direct qui comporte une jauge de contrainte (5) servant à la mesure du couple, la jauge de contrainte (5) possédant une couche de mesure (12),
**caractérisé en ce que** la jauge de contrainte (5) est disposée directement sur une surface cylindrique de l'arbre creux (3) et **en ce que** la couche de mesure (12) possède une structuration au laser.

2. Dispositif de mesure de couple (4) selon la revendication 1, **caractérisé en ce que** l'arbre creux (3) possède un matériau de base métallique, une couche d'isolation (11) appliquée sur celui-ci ainsi que, appliquée sur celle-ci, la couche de mesure (12) formant la jauge de contrainte (5).

3. Dispositif de mesure de couple (4) selon la revendication 1 ou 2, **caractérisé en ce que** la couche de mesure (12) a une épaisseur minimale de 0,05 µm et maximale de 1,0 µm.

4. Dispositif de mesure de couple (4) selon l'une des revendications 1 à 3, **caractérisé en ce que** la couche de mesure (12) est formée d'un alliage de NiCr.

5. Dispositif de mesure de couple (4) selon l'une des revendications 1 à 4, **caractérisé en ce qu'**une couche de protection (13) est appliquée sur la couche de mesure (12) .

6. Dispositif de mesure de couple (4) selon l'une des revendications 1 à 5, **caractérisé en ce que** l'épaisseur totale du revêtement direct est au maximum de 20 µm.

7. Dispositif de mesure de couple (4) selon l'une des revendications 1 à 6, **caractérisé par** un composant de transmission de signal (6) disposé sur l'arbre creux (3) .

8. Dispositif de mesure de couple (4) selon la revendication 7, **caractérisé en ce que** le composant de transmission de signal est une bague collectrice.

9. Dispositif de mesure de couple (4) selon la revendication 7, **caractérisé en ce que** le composant de transmission de signal (6) est configuré pour une transmission de signal sans fil.

10. Dispositif de mesure de couple (4) selon l'une des revendications 7 à 9, **caractérisé par** un composant d'interprétation de signal disposé sur l'arbre creux (6).

11. Dispositif de mesure de couple (4) selon l'une des revendications 1 à 10, **caractérisé par** un composant de mesure de la vitesse de rotation (10) disposé sur l'arbre interne (2).

12. Pédalier comprenant un dispositif de mesure de couple (4) selon l'une des revendications 1 à 11.

13. Procédé de fabrication d'un dispositif de mesure de couple (4) ayant les caractéristiques suivantes :
- un revêtement fournissant une couche de mesure (12) servant à la mesure du couple, formant une jauge de contrainte (5), est appliqué sous forme de revêtement direct sur un matériau de base d'un arbre creux (3), la structuration de la jauge de contrainte (5) n'étant effectuée qu'après l'application du revêtement sur l'arbre creux (3),
- l'arbre creux (3) est relié en rotation solidaire avec un arbre interne (2) disposé de manière coaxiale à l'intérieur de celui-ci, l'arbre interne (2) formant un arbre d'entraînement et l'arbre creux (3) un arbre de sortie,
**caractérisé en ce que** la jauge de contrainte est appliquée directement sur une surface cylindrique de l'arbre creux (3) et
**en ce que** la structuration de la jauge de contrainte (5) est effectuée par usinage au laser.

14. Procédé selon la revendication 13, **caractérisé en ce que** pour la fabrication du revêtement direct, une couche d'isolation (11) est tout d'abord produite sur le matériau de base de l'arbre creux (3) et ensuite la couche de mesure (12) sur la couche d'isolation (11).

15. Procédé selon la revendication 13 ou 14, **caractérisé en ce qu'**au moins une couche parmi la couche d'isolation (11) et la couche de mesure (12) est produite par un procédé PVD ou PACVD.
